# EUROPÄISCHE PATENTSCHRIFT

(11) **EP 1 590 643 B1**
(45) Veröffentlichungstag und Bekanntmachung des Hinweises auf die Patenterteilung: **22.04.2009**
(21) Anmeldenummer: 04707873.8
(22) Anmeldetag: 04.02.2004
(51) Int. Cl.: G01L 5/00

(54) **MESSLAGER MIT INTEGRIERTEM DATENERFASSUNGS- UND -VERARBEITUNGSSYSTEM**
METER BEARING COMPRISING AN INTEGRATED DATA DETECTION AND PROCESSING SYSTEM
PALIER DE MESURE COMPORTANT UN SYSTEME D'ENREGISTREMENT ET DE TRAITEMENT DE DONNEES INTEGRE

(30) Priorität: 05.02.2003 DE 10304592
(43) Veröffentlichungstag der Anmeldung: 02.11.2005
(73) Patentinhaber: Schaeffler KG, 91074 Herzogenaurach (DE)
(72) Erfinder: GEMPPER, Sven, 97332 Volkach (DE); HERING, Joachim, 97078 Wuerzburg (DE); GLÜCK, Stefan, 97424 Schweinfurt (DE); PECHER, Alfred, 97488 Stadtlauringen (DE); HEIM, Jens, 97424 Schweinfurt (DE); SCHMIDT, Timo, 77815 Bühl (DE); SCHARTING, Stefan, 97469 Gochsheim (DE); STREIT, Edgar, 97711 Poppenlauer (DE)
(86) Internationale Anmeldenummer: PCT/DE2004/000184
(87) Internationale Veröffentlichungsnummer: WO 2004/070337

(56) Entgegenhaltungen:
- EP-A- 0 432 122
- DE-A- 10 136 438
- DE-A- 19 747 001

## Beschreibung

### Anwendungsgebiet der Erfindung

Die Erfindung betrifft ein Messlager mit Sensoren zur Erfassung von auf das Lager einwirkenden physikalischen Größen sowie mit elektronischen Bausteinen zur Auswertung sowie Übertragung der Sensorausgangssignale gemäß dem Oberbegriff des Patentanspruchs 1.

### Hintergrund der Erfindung

Aus der DE 101 36 438 A1 ist eine Sensoranordnung in einem Wälzlager bekannt, die zur Ermittlung physikalischer Größen während der Bewegung eines im Wälzlager geführten Bauteils geeignet ist. Bei dieser Sensoranordnung werden die auf die Lagerschalen des Wälzlagers wirkenden Kräfte und Momente derart erfasst, dass die mechanischen Spannungen oder sonstigen physikalischen Beeinflussungen der Lagerschalen mit in den Lagerschalen integrierten Sensorelementen und Elektronikbausteinen ermittelbar sind. Die Sensoren sind dabei als Dehnungsmessstreifen ausgebildet, die vorzugsweise in einer Nut am Umfang der feststehenden Lagerschale befestigt sind, wobei letztere als innere oder äußere Lagerschale eines Wälzlagers aufgebildet sein kann. Gemäß dieser Druckschrift können die Dehnungsmesswiderstände über eine Isolationsschicht auf einem metallischen Zwischenträger wie z. B. einem Plättchen aufgebracht sein. Ein weiteres, als Schaltungsträger ausgebildetes Trägermaterial umgibt dabei den genannten Zwischenträger mit den Dehnungsmesswiderständen und dient zur Aufnahme von elektronischen Bausteinen und Leiterbahnen. Zur Befestigung des Zwischenträgers mit den Dehnungsmesswiderständen und des Schaltungsträgers in die Nut des Wälzlagers sind diese dort eingepresst oder aufgeschweißt.

Darüber hinaus ist aus dieser DE 101 36 438 A1 bekannt, dass die Dehnungsmesswiderstände auf dem metallischen Zwischenträger in einer axial und tangential messende Voll- oder Halbbrückenschaltung aufgebracht sein können. Zudem offenbart diese Druckschrift, dass mit den elektronischen Bausteinen eine Signalauswertung und Signalübertragung zu weiteren Messstellen oder anderen Auswerteschaltungen bzw. zu einem Anschlussstecker erfolgt. Die Signalübertragung bei diesem bekannten Messlager kann dabei seriell über einen Digital- oder einen Analogbus erfolgen, der beispielsweise in einem Kraftfahrzeug angeordnet ist.

Dieses bekannte Messlager weist aufgrund der Anordnung von Dehnungsmessstreifen und elektronischen Bausteinen in einer Aussparung in der Nut des Lagerringes zwar einen vergleichsweise hohen und auch sehr vorteilhaften Integrationsgrad auf, jedoch wird für diesen Aufbau eine relativ breite Nut benötigt. Damit ist in Relation zur Breite der Nut die nutzbare Fläche für den Sensor zu klein bzw. reduziert. Da die Nut in einem solchen Lagerring zur Vermeidung einer Bauteilschwächung jedoch möglichst klein gehalten werden soll, ist die Umsetzung der aus der DE 101 36 438 A1 bekannten Anordnung in ein marktreifes Produkt weniger wahrscheinlich. Dieses technische Problem tritt insbesondere auch bei axial sehr schmalen Wälzlagern auf.

### Aufgabe der Erfindung

Vor diesem Hintergrund besteht die Aufgabe an die Erfindung darin, ein aus der DE 101 36 438 A1 bekanntes Messlager derart zu verbessern, dass der Integrationsgrad der Mess- und Auswerteanordnung weiter erhöht wird, um diese in einer möglichst schmalen und platzsparenden Aussparung in einem der Lagerringe unterbringen zu können.

### Zusammenfassung der Erfindung

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Die Erfindung geht demnach von einem gattungsgemäßen Messlager aus, bei dem in einer Aussparung am Umfang eines der Lagerringe Dehnungsmessstreifen angeordnet sind. Darüber hinaus sind in dieser Aussparung an einem Trägermaterial elektrische Leiterbahnen sowie elektronische Bausteine zur Auswertung der Ausgangssignale der Dehnungsmessstreifen sowie zur Übertragung von Zwischen- und Endergebnissen angeordnet, wobei die Dehnungsmessstreifen mit den elektronischen Bausteinen über elektrische Leiterbahnen verbunden sind. Gemäß der Erfindung ist ein solches Messlager nun so weitergebildet, dass die Dehnungsmessstreifen radial unterhalb (Außenring) und/oder oberhalb des Trägermaterials (Innenring) angeordnet sind.

Durch diesen Aufbau wird erreicht, dass das in der Aussparung am Umfang des Lagerringes befindliche Mess- und Auswertesystem aus Dehnungsmessstreifen, Leiterbahnen und elektronischen Bausteinen nun in mehreren Schichten aufgebaut ist und damit deutlich weniger Fläche benötigt als das bekannte Messlager. Daher kann bei gleicher Aussparungs- oder Nutbreite entweder mehr an Mess- und Auswertetechnik in dieser Aussparung untergebracht werden, oder es ist nur eine besonders schmale Aussparung am Umfang des Lagerringes notwenig, um ein bestimmtes Mess- und Auswertesystem unterbringen zu können oder die Tiefe der Nut kann besonders gering ausgeführt werden. Ein weiterer Vorteil besteht darin, dass die gesamte Nutbreite für die DMS Messstreifen nutzbar ist, und somit die Verformungen besser erfasst werden können.

Bei einem solchen Messwälzlager ist das genannte Mess- und Auswertesystem in einer Umfangsaussparung vorzugsweise am feststehenden Lagerring ausgebildet. Bei einer Anordnung des Mess- und Auswertungssystems am drehenden Lagerring sind die üblicherweise bekannten Systeme (Telemetrie, induktive Kopplung, Schleifkontakte) zur Daten- und Energieübertragung zu verwenden.

In einer besonders vorteilhaften Weiterbildung der Erfindung ist hinsichtlich des Mess- und Auswertesystems vorgesehen, dass die Dehnungsmessstreifen direkt auf die Oberfläche wenigstens einer der Lagerringe aufgebracht sind. Dieses Aufbringen der Dehnungsmessstreifen auf die Oberfläche eines Lagerringes im Bereich seiner Umfangsaussparung wird bevorzugt durch Aufsputtern erreicht. Das Ausbilden von Oberflächenstrukturen auf planen Körpern durch das Aufdampfen von vorzugsweise Leitern oder Halbleitern unter Vakuum ist zwar an sich bekannt, neu und technisch nicht einfach zu bewältigen ist jedoch das Aufsputtern von beispielsweise Dünnschicht-Dehnungsmessstreifen auf eine gekrümmte Oberfläche, wie dies eben die Umfangsaussparung eines Lagerringes ist.

Wie Versuche zeigten, lassen sich derartige Strukturen bei geeigneter Verfahrenstechnik mit gutem Erfolg erzeugen. So kann beispielsweise vorgesehen sein, dass die Dehnungsmessstreifen bei einem Lagerring aus einem elektrisch nicht oder nur schlecht leitendem Material (z. B. Kunststoff) direkt auf die Oberfläche des Lagerrings oder bei einem Lagerring aus elektrisch leitendem Material auf eine dazwischen angeordnete Siliziumdioxidschicht aufgebracht werden.

Zur elektrischen Verbindung der Dehnungsmessstreifen mit wenigstens einer der Leiterbahnen und/oder direkt mit den elektronischen Bausteinen sind in einer weiteren sinnvollen Ausgestaltung der Erfindung Verbindungsdrähte (Bonddrähte) vorgesehen, die Aussparungen in dem Trägermaterial für die elektronischen Bausteine durchdringen. Dieses Trägermaterial ist vorzugsweise als flexible Kunststofffolie ausgebildet.

Zum Schutz des in der Umfangsaussparung des Lagerringes angeordneten Mess- und Auswertesystems gegen äußere mechanische und/oder verschmutzende Einflüsse ist in einer anderen Ausgestaltung der Erfindung vorgesehen, dass die Aussparungen des Trägermaterials und/oder alle in der Aussparung am Umfang des Lagerrings angeordneten Bausteine mit einem flexiblen und elektrisch nicht leitfähigen Abdeckmaterial überdeckt ist. Dieses Abdeckmaterial ist bevorzugt als organische plastische Vergussmasse ausgebildet, mit der sich schnell und sauber die Abdeckzonen überziehen lassen.

In einer weiteren bevorzugten Ausgestaltung des Messlagers ist vorgesehen, dass deren elektrischen und elektronischen Bausteine zur Ermittlung der Drehzahl und/oder der Drehrichtung eines im Lager gelagerten Körpers, der auf das Lager wirkenden Radial- und der Axialkraft, der Kraftrichtung, des Lagergeräusches, der Lagertemperatur und einer gegebenenfalls auftretenden Unwucht ausgebildet sind.

Die elektronischen Bausteine können als einzelne diskrete elektronische Bausteine wie etwa Operationsverstärker, Kondensatoren, Widerstände oder aber auch als komplexe und sehr kleine Mikrocomputer aufgebaut sein. Darüber hinaus wird es für bestimmte Anwendungsfälle als sinnvoll angesehen, wenn eine Mehrzahl von Mikrocomputern in der Umfangsaussparung des Lagerringes angeordnet und über Datenleitungen verbunden sind, über die ein digitaler Datenaustausch erfolgen kann.

Zudem ist es vorteilhaft, wenn wenigstens einer der elektronischen Bausteine über eine Anschlussstelle verfügt, über die Rohdaten und/oder aufbereitete Informationen über den aktuellen physikalischen Zustand des Lagers und/oder des mit dem Lager verbundenen Bauteils zu wenigstens einer außerhalb des Lagers befindlichen gesonderten Anzeige-, Datenspeicher- und/oder Datenverarbeitungseinrichtung leitbar sind.

Schließlich ist kann vorgesehen sein, dass zwischen der Siliziumdioxidschicht auf der Umfangsnut im Lagerring und den Dehnungsmessstreifen und/oder den Leiterbahnen ein Klebstoff aufgetragen ist, der als Bindemittel zwischen der mit Siliziumdioxid beschichteten Oberfläche und eben diesen elektrischen Bauteilen dient.

### Kurze Beschreibung der Zeichnungen

Die Erfindung lässt sich anhand von konkreten Ausführungsbeispielen erläutern, die in der beigefügten Zeichnung dargestellt sind. Darin zeigen
- Figur 1: einen schematischen Querschnitt durch ein Wälzlager,
- Figur 2: eine Draufsicht auf eine Umfangsnut des Wälzlagers gemäß Figur 1,
- Figur 3: eine elektrische Messbrückenschaltung,
- Figur 4: eine Draufsicht auf zwei Dünnschicht-Dehnungsmess-Sensoren in Brückenschaltungen, die in einer Umfangsnut in einem Lagerring angeordnet sind, und
- Figur 5: einen schematischen Querschnitt durch den Außenring des Lagers gemäß Figur 1 im Bereich des Mess- und Auswertesystems.

### Ausführliche Beschreibung der Zeichnungen

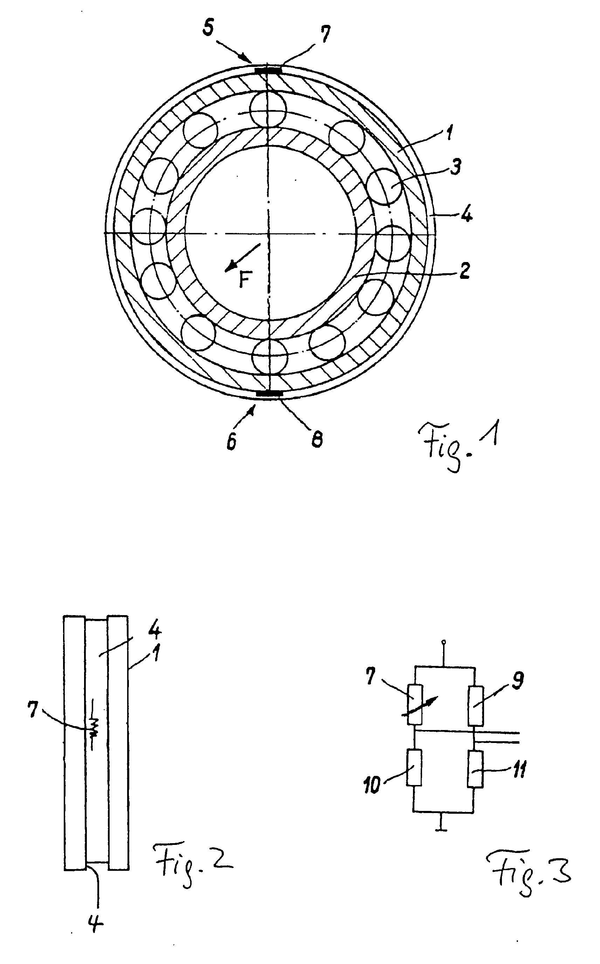

Figur 1 zeigt demnach in einem groben Überblick einen Querschnitt durch ein Messwälzlager, das im wesentlichen aus einem Außenring 1, einem Innenring 2 und zwischen diesen beiden Lagerringen 2, 3 angeordneten Wälzkörpern 3 besteht. Darüber hinaus ist Figur 1 sowie auch der Figur 2 mit ihrer Draufsicht auf die Umfangsfläche des Außenringes 1 entnehmbar, dass am Außenumfang des Außenringes 1 eine Ringnut 4 ausgebildet ist, in der an Messstellen 5, 6 Sensoren 7, 8 zur Erfassung beispielsweise einer Kraft F angeordnet sind. Die Nut in dem Außenring 1 muss dabei nicht unbedingt als Umfangsnut ausgebildet sein, da die genannten Sensoren 7, 8 auch in axial ausgerichteten Nuten am Umfang eines der beiden Lagerringe 1, 2 befestigt sein können.

Wie Figur 2 andeutet und Figur 3 zeigt, sind die Sensoren 7, 8 als Dehnungsmessstreifen ausgebildet und mit anderen elektrischen Widerständen 9, 10, 11, 27, 28, 29 in wenigstens einer Messbrücke miteinander verschaltet. Dabei weisen diese Dehnungsmessstreifen jeweils einen variablen elektrischen Widerstand auf, der bei einem Vorbeirollen des Wälzkörpers 3 eine Druckbelastung mit der Kraft F auf den Außenring 1 mit einer Widerstandänderung beantwortet, die an der Messbrücke als Messsignal abgreifbar ist. In der Figur ist nicht gezeigt die Verwendung von zwei variablen Widerständen 7 und 11.

Während bei dem bekannten Messlager die einzelnen Dehnungsmessstreifen und die dazu unmittelbar benachbarten elektronischen Bausteine in der gleichen Radialebene in der Aussparung eines Lagerringes angeordnet sind, wird ein erfindungsgemäßes Messlager dadurch geschaffen, dass die Dehnungsmessstreifen in einer Radialebene an dem Lagerring befestigt sind, die von der Radialebene der elektronischen Bausteine und Leiterbahnen der flexiblen Folie verschieden ist. Diese andere Radialebene der Dehnungsmessstreifen ist in dem hier dargestellten Ausführungsbeispiel unterhalb der Radialebene der elektronischen Bausteine und der Leiterbahnen angeordnet, so dass sich der Flächenbedarf dieses hochintegrierten Mess- und Auswertesystems deutlich verringert. Auf diesen Aufbau wird später noch genauer eingegangen.

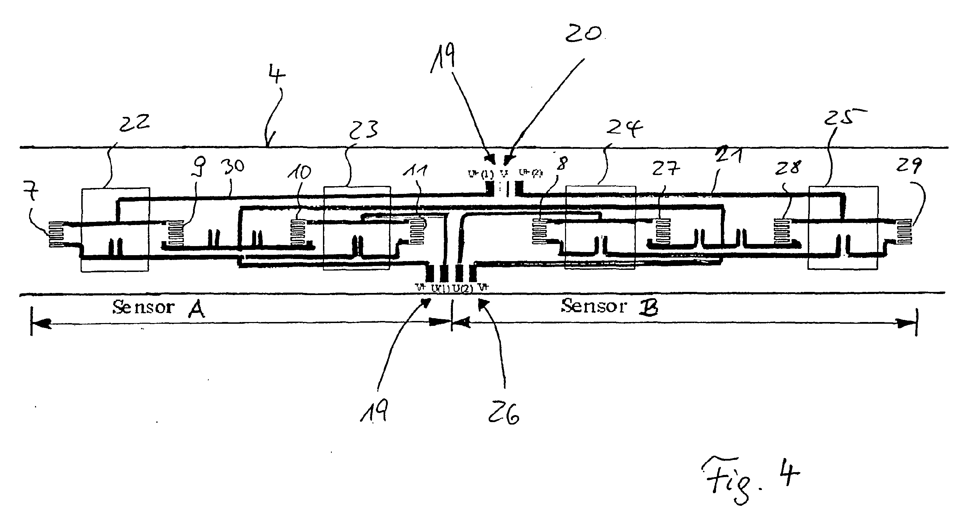

In Figur 4 ist in einer Abwicklung der Umfangsnut 4 des Außenlagerrings 1 zunächst dargestellt, wie die Dehnungsmessstreifen 7, 9, 10, 11 eines ersten Sensors A und Dehnungsmessstreifen 8, 27, 28, 29 eines zweiten Sensors B in einer Reihe hintereinander im Bereich der Bewegungsbahn der Wälzkörper 22, 23, 24, 25 angeordnet sind. Diese Dehnungsmessstreifen sind in diesem Ausführungsbeispiel auf eine mit Siliziumdioxid beschichtete Oberfläche der Umfangsnut des Lageraußenringes aufgesputtert und damit als Dünnschichtsensoren ausgebildet.

Wie dieser Abbildung deutlich entnehmbar ist, sind die Dehnungsmessstreifen 7, 9, 10, 11 bzw. die Dehnungsmessstreifen 8, 27, 28, 29 der beiden Sensoren A, B jeweils über ebenfalls aufgesputterte Leiterbahnen 21, 30 zu Messbrücken miteinander verschaltet, deren von den vorbeilaufenden Wälzkörpern 22, 23, 24, 25 modulierten Messsignale an Kontaktstellen 20, 26 abgreifbar sind. Darüber hinaus sind im Bereich dieser Messsignalkontaktstellen 20, 26 auch Kontaktstellen 19 für die Spannungsversorgung der Dehnungsmessstreifen 7, 9, 10, 11 bzw. 8, 27, 28, 29 aufgesputtert.

Radial oberhalb dieser Dünnschicht-Dehnungsmessstreifen sind gemäß dem Kerngedanken der Erfindung in einer anderen Radialebene in Bezug auf den Lagerring 1 alle anderen elektrischen Leiterbahnen und elektronischen Bausteine angeordnet, die zu der Mess- und Auswerteeinrichtung dieses Wälzlagers gehören.

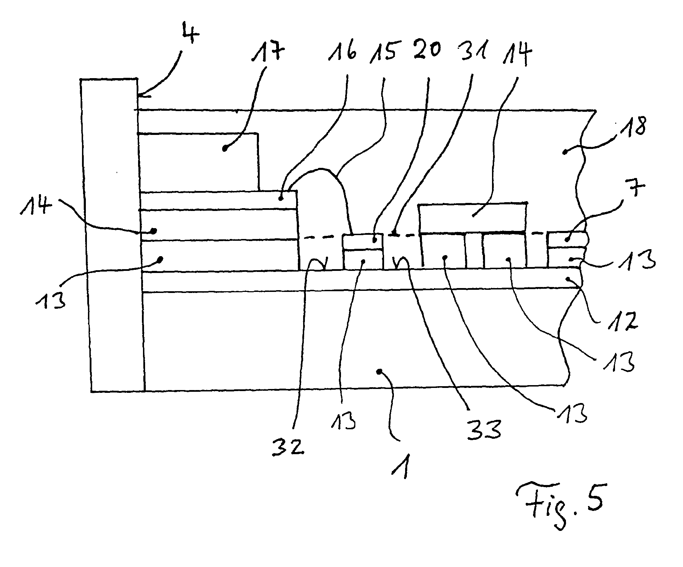

Wie die stark vereinfachte Querschnittsdarstellung des Gesamtaufbaus des Mess- und Auswertesystems in diesem Lageraußenring 1 in Figur 5 zeigt, ist am Boden der Umfangsnut 4 des Lagerrings 1 zunächst eine Isolationsschicht 12 (z. B. Al₂ 0₃ oder Siliziumdioxidschicht) aufgetragen, die als elektrische Isolationsschicht für die darüber angeordneten elektrischen Bauteile dient.

Auf dieser Isolationsschicht 12 ist ein Klebstoff 13 aufgebracht, der ein flexibles Trägermaterial 14 trägt, auf dem radial nach außen weisend die elektrischen Leiterbahnen 16 und die elektronischen Bausteine 17 (wie etwa Mikrocomputer) vorzugsweise ebenfalls aufgeklebt oder aber aufgesputtert sind. Unterhalb der Radialebene 31 des Trägermaterials 14 für die Leiterbahnen 16 und die elektronischen Bausteine 17 sind die Dehnungsmessstreifen 7, 9, 10, 11 bzw. 8, 27, 28, 29 samt Ihrer Leiterbahnen 21, 30 und Kontaktstellen 19, 20, 26 angeordnet, von denen hier allerdings nur ein angeschnittener Dehnungsmessstreifen 7 sowie die Kontaktstelle 20 dargestellt sind.

Zur Verbindung der die Dehnungsmessstreifen enthaltenden Sensoren bzw. Messbrücken A, B mit den eine Radialebene höher angeordneten Leiterbahnen 16 oder elektronischen Bausteinen 17 sind die Anschlussstellen 19, 20, 26 der Sensoren A, B ihm Bereich von Aussparungen 32, 33 nicht von dem Trägermaterial 14 überdeckt, so dass mit Verbindungsdrähten (Bonddrähten) 15 elektrische Verbindungen zwischen den genannten Bauteilen geschaffen sind. Diese Verbindungsdrähte 15 sind dabei vorzugsweise als mittels eines Laserstrahls kontaktierte oder flüssige Metallfäden ausgebildet, die von einer Kontaktstelle zur nächsten Kontaktstelle gezogen sind.

Über alle genannten Bausteine ist in diesem Ausführungsbeispiel ein Abdeckmaterial 18 angeordnet, das flexibel und elektrisch isolierend für einen zuverlässigen mechanischen und elektrischen Schutz der Trägerfolie 14 und der elektrischen und elektronischen Bauteile sorgt.

Das erfindungsgemäße Messlager zeichnet sich durch seine sehr flächensparende Bauweise aus, so dass entsprechende Mess- und Auswertesysteme auch in sehr schmal bauende Wälzlager einbaubar sind, die bisher nicht als Messlager realisierbar waren. Darüber hinaus kann ein Lager mit dem radial geschichtet aufgebauten Mess- und Auswertesystem in einer sehr schmalen Umfangsnut untergebracht werden, so dass eine Bauteilschwächung auf ein geringst mögliches Maß reduziert ist. Durch Dünnschichtaufbau und flachbauende Maßnahmen (gedünnte ASIC'S) ist die Tiefe der Nut und damit die Bauteilschwächung weitgehend reduziert.

### Bezugszeichenliste

- 1: Außenring
- 2: Innenring
- 3: Wälzkörper
- 4: Nut
- 5: Messstelle
- 6: Messstelle
- 7: Dehnungsmessstreifen
- 8: Dehnungsmessstreifen
- 9: Dehnungsmessstreifen
- 10: Dehnungsmessstreifen
- 11: Dehnungsmessstreifen
- 12: Siliziumdioxidschicht
- 13: Klebstoff
- 14: Trägermaterial
- 15: Verbindungsdraht; Bonddraht
- 16: Leiterbahn
- 17: Mikrocomputer
- 18: Abdeckmaterial
- 19: Spannungsanschluss
- 20: Anschlussbereich für Sensor A
- 21: Leiterbahn
- 22: Wälzkörper
- 23: Wälzkörper
- 24: Wälzkörper
- 25: Wälzkörper
- 26: Anschlussbereich für Sensor B
- 27: Dehnungsmessstreifen
- 28: Dehnungsmessstreifen
- 29: Dehnungsmessstreifen
- 30: Elektrische Leitung
- 31: Radialebene
- 32: Aussparung
- 33: Aussparung

## Patentansprüche

1. Messlager mit einer Aussparung (4) am Umfang von mindestens einem seiner Lagerringe (1, 2), mit in der Aussparung (4) angeordneten Dehnungsmessstreifen (7, 8, 9, 10, 11, 27, 28, 29) und mit an einem Trägermaterial (14) angeordneten Leiterbahnen (16) und elektronischen Bausteinen (17) zur Auswertung und Übertragung der Ausgangssignale der Dehnungsmessstreifen, wobei die Dehnungsmessstreifen mit den zu den elektronischen Bausteinen (17) führenden elektrischen Leiterbahnen (16) elektrisch verbunden sind, **dadurch gekennzeichnet, dass** die Dehnungsmessstreifen (7, 8, 9, 10, 11, 27, 28, 29) in einer Radialebene an dem Lagerring (1, 2) befestigt sind, die beim Außenring (1) unterhalb und/oder beim Innenring (2) oberhalb der Radialebene (31) des Trägermaterials (14) und der daran befindlichen Leiterbahnen (16) und elektronischen Bausteine (17) angeordnet ist.

2. Messlager nach Anspruch 1, **dadurch gekennzeichnet, dass** die Oberfläche des Lagerringes (1) zumindest im Bereich der Aussparung (4) eine Isolationsschicht z. B. Siliziumdioxidschicht (12) aufweist.

3. Messlager nach Anspruch 2, **dadurch gekennzeichnet, dass** auf der Isolationsschicht (12) ein Klebstoff (13) auf den Lagerring (1) aufgetragen ist, der die Dehnungsmessstreifen (7, 8, 9, 10, 11, 27, 28, 29), das Trägermaterial (14) und/oder elektrische Leiter (21, 30) trägt.

4. Messlager nach wenigstens einem der Ansprüche 1 bis 3, **dadurch gekennzeichnet, dass** die Dehnungsmessstreifen (7, 8, 9, 10, 11, 27, 28, 29), die elektrischen Leiter (16, 21, 30) und/oder die elektronischen Bausteine (17) direkt auf die Oberfläche der Aussparung (4) des Lagerringes (1) oder auf die Siliziumdioxidschicht (12) aufgesputtert sind.

5. Messlager nach wenigstens einem der Ansprüche 1 bis 3, **dadurch gekennzeichnet, dass** die Dehnungsmessstreifen (7, 8, 9, 10, 11, 27, 28, 29) über Verbindungsdrähte (Bonddrähte 15) mit den Leiterbahnen (16) oder direkt mit den elektronischen Bausteinen (17) verbunden sind.

6. Messlager nach wenigstens einem der vorherigen Ansprüche, **dadurch gekennzeichnet, dass** im Trägermaterial (14) im Bereich der Verbindungsdrähte (15) Aussparungen (32, 33) vorgesehen sind.

7. Messlager nach Anspruch 1 oder Anspruch 6, **dadurch gekennzeichnet, dass** das Trägermaterial (14) flexibel ausgebildet ist.

8. Messlager nach Anspruch 7, **dadurch gekennzeichnet, dass** das Trägermaterial (14) aus einer Kunststofffolie besteht.

9. Messlager nach wenigstens einem der vorherigen Ansprüche, **dadurch gekennzeichnet, dass** die Aussparungen (32, 33) im Bereich des Trägermaterials (14) und/oder die gesamte Aussparung (Nut 4) im Lagerring (1) mit einem flexiblen und elektrisch nicht leitfähigen Abdeckmaterial (18) überdeckt ist.

10. Messlager nach Anspruch 9, **dadurch gekennzeichnet, dass** das Abdeckmaterial (18) als plastische organische Vergussmasse ausgebildet ist.

11. Messlager nach wenigstens einem der vorherigen Ansprüche, **dadurch gekennzeichnet, dass** dieses als Wälzlager ausgebildet ist, dessen Lagerringe aus einem Metall oder einem Kunststoff bestehen.

12. Messlager nach Anspruch 11, **dadurch gekennzeichnet, dass** die Aussparung (Nut 4) am feststehenden Lagerring, vorzugsweise am feststehenden Lageraußenring (1) ausgebildet ist.

13. Messlager nach wenigstens einem der vorherigen Ansprüche, **dadurch gekennzeichnet, dass** deren elektrischen und elektronischen Bausteine (17) zur Ermittlung der Drehzahl und/oder der Drehrichtung eines im Lager gelagerten Körpers, der auf das Lager wirkenden Radial- und der Axialkraft, der Kraftrichtung, des Lagergeräusches, der Lagertemperatur und einer gegebenenfalls auftretenden Unwucht ausgebildet sind.

14. Messlager nach Anspruch 13, **dadurch gekennzeichnet, dass** die elektronischen Bausteine wenigstens einen Mikrocomputer (17) umfassen.

15. Messlager nach Anspruch 14, **dadurch gekennzeichnet, dass** mehrere Mikrocomputer (17) untereinander über Datenleitungen verbunden sind, über die ein vorzugsweise digitaler Datenaustausch erfolgen kann.

16. Messlager nach wenigstens einem der Ansprüche 13 bis 15, **dadurch gekennzeichnet, dass** wenigstens einer der elektronischen Bausteine (17) über eine Anschlussstelle verfügt, über die Rohdaten und/oder aufbereitete Informationen über den aktuellen physikalischen Zustand des Lagers und/oder des mit dem Lager verbundenen Bauteils zu wenigstens einem außerhalb des Lagers befindlichen gesonderte Anzeige-, Datenspeicher- und/oder Datenverarbeitungseinrichtung leitbar sind.

## Claims

1. Measuring bearing having a cutout (4) at the circumference of at least one of its bearing rings (1, 2), having expansion measuring strips (7, 8, 9, 10, 11, 27, 28, 29) arranged in the cutout (4) and having conductor tracks (16) arranged on a support material (14) and electronic chips (17) for evaluating and transmitting the output signals from the expansion measuring strips, the expansion measuring strips being electrically connected to the electrical conductor tracks (16) routed to the electronic chips (17), **characterized in that** the expansion measuring strips (7, 8, 9, 10, 11, 27, 28, 29) are mounted in a radial plane on the bearing ring (1, 2), said radial plane being arranged below, in the case of the outer ring (1), and/or above, in the case of the inner ring (2), the radial plane (31) of the support material (14) and of the conductor tracks (16) and electronic chips (17) situated thereon.

2. Measuring bearing according to Claim 1, **characterized in that** the surface of the bearing ring (1) has an insulating layer, e.g. a silicon dioxide layer (12), at least in the region of the cutout (4).

3. Measuring bearing according to Claim 2, **characterized in that** an adhesive (13) is applied to the insulating layer (12) on the bearing ring (1) and supports the expansion measuring strips (7, 8, 9, 11, 27, 28, 29), the support material (14) and/or electrical conductors (21, 30).

4. Measuring bearing according to at least one of Claims 1 to 3, **characterized in that** the expansion measuring strips (7, 8, 9, 10, 11, 27, 28, 29), the electrical conductors (16, 21, 30) and/or the electronic chips (17) are sputtered directly onto the surface of the cutout (4) in the bearing ring (1) or onto the silicon dioxide layer (12).

5. Measuring bearing according to at least one of Claims 1 to 3, **characterized in that** the expansion measuring strips (7, 8, 9, 10, 11, 27, 28, 29) are connected to the conductor tracks (16) via connecting wires (bonding wires 15) or to the electronic chips (17) directly.

6. Measuring bearing according to at least one of the preceding claims, **characterized in that** the support material (14) contains cutouts (32, 33) in the region of the connecting wires (15).

7. Measuring bearing according to Claim 1 or Claim 6, **characterized in that** the support material (14) is in flexible form.

8. Measuring bearing according to Claim 7, **characterized in that** the support material (14) is made of a plastic film.

9. Measuring bearing according to at least one of the preceding claims, **characterized in that** the cutouts (32, 33) in the region of the support material (14) and/or the whole cutout (groove 4) in the bearing ring (1) is/are covered by a flexible and electrically nonconductive covering material (18).

10. Measuring bearing according to Claim 9, **characterized in that** the covering material (18) is in the form of a plastic organic potting compound.

11. Measuring bearing according to at least one of the preceding claims, **characterized in that** it is in the form of a roller bearing whose bearing rings are made of a metal or a plastic.

12. Measuring bearing according to Claim 11, **characterized in that** the cutout (groove 4) is made on the stationary bearing ring, preferably on the stationary outer bearing ring (1).

13. Measuring bearing according to at least one of the preceding claims, **characterized in that** its electrical and electronic chips (17) are designed for ascertaining the speed of rotation and/or the direction of rotation of a body mounted in the bearing, the radial and axial forces acting on the bearing, the direction of force, the bearing noise, the bearing temperature and any imbalance which may arise.

14. Measuring bearing according to Claim 13, **characterized in that** the electronic chips comprise at least one microcomputer (17).

15. Measuring bearing according to Claim 14, **characterized in that** a plurality of microcomputers (17) are connected to one another by means of data lines via which preferably digital data interchange can take place.

16. Measuring bearing according to at least one of Claims 13 to 15, **characterized in that** at least one of the electronic chips (17) has a connecting point via which raw data and/or conditioned information about the current physical state of the bearing and/or of the component connected to the bearing can be routed to at least one separate display, data-storage and/or data-processing device situated outside of the bearing.

## Revendications

1. Palier de mesure doté d'une découpe (4) à la périphérie d'au moins l'une de ses bagues de palier (1, 2), de rubans de mesure d'allongement (7, 8, 9, 10, 11, 27, 28, 29) disposés dans la découpe (4), de pistes conductrices (16) disposées sur un matériau de support (14) et de composants électroniques (17) d'évaluation et de transmission des signaux de sortie des rubans de mesure d'allongement, les rubans de mesure d'allongement étant reliés électriquement aux pistes électriquement conductrices (16) qui conduisent aux composants électroniques (17),
**caractérisé en ce que**
les rubans de mesure d'allongement (7, 8, 9, 10, 11, 27, 28, 29) sont fixés sur la bague de palier (1, 2) dans un plan radial situé en dessous pour la bague extérieure (1) et/ou au-dessus pour la bague intérieure (2) du plan radial (31) du matériau de support (14) et des pistes conductrices (16) et composants électroniques (17) situés sur ce dernier.

2. Palier de mesure selon la revendication 1, **caractérisé en ce qu'**au moins dans la zone occupée par la découpe (4), la surface de la bague de palier (1) présente une couche d'isolation, par exemple une couche (12) de dioxyde de silicium.

3. Palier de mesure selon la revendication 2, **caractérisé en ce qu'**un adhésif (13) est appliqué au-dessus de la couche d'isolation (12) prévue sur la bague de palier (1) et porte les rubans de mesure d'allongement (7, 8, 9, 10, 11, 27, 28, 29), le matériau de support (14) et/ou les conducteurs électriques (21, 30).

4. Palier de mesure selon au moins l'une des revendications 1 à 3, **caractérisé en ce que** les rubans de mesure d'allongement (7, 8, 9, 10, 11, 27, 28, 29), les conducteurs électriques (16, 21, 30) et/ou les composants électroniques (17) sont déposés par pulvérisation directe sur la surface de la découpe (4) de la bague de palier (1) ou sur la couche (12) de dioxyde de silicium.

5. Palier de mesure selon au moins l'une des revendications 1 à 3, **caractérisé en ce que** les rubans de mesure d'allongement (7, 8, 9, 10, 11, 27, 28, 29) sont reliés par des fils de liaison (fils collés 15) aux pistes conductrices (16) ou directement aux composants électroniques (17).

6. Palier de mesure selon au moins l'une des revendications précédentes, **caractérisé en ce que** des découpes (32, 33) sont prévues dans la zone du matériau de support (14) occupée par les fils de liaison (15).

7. Palier de mesure selon la revendication 1 ou la revendication 6, **caractérisé en ce que** le matériau de support (14) est flexible.

8. Palier de mesure selon la revendication 7, **caractérisé en ce que** le matériau de support (14) est constitué d'une feuille de matière synthétique.

9. Palier de mesure selon au moins l'une des revendications précédentes, **caractérisé en ce que** les découpes (32, 33) de la zone occupée par le matériau de support (14) et/ou l'ensemble de la découpe (rainure 4) ménagée dans la bague de palier (1) sont recouvertes par un matériau de recouvrement (18) flexible et électriquement non conducteur.

10. Palier de mesure selon la revendication 9, **caractérisé en ce que** le matériau de recouvrement (18) est configuré comme pâte organique plastique de scellement.

11. Palier de mesure selon au moins l'une des revendications précédentes, **caractérisé en ce qu'**il est configuré comme palier de roulement dont les bagues de palier sont constituées de métal ou de matière synthétique.

12. Palier de mesure selon la revendication 11, **caractérisé en ce que** la découpe (rainure 4) est formée sur la bague de palier fixe et de préférence sur la bague extérieure fixe de palier (1).

13. Palier de mesure selon au moins l'une des revendications précédentes, **caractérisé en ce que** ces composants électriques et électroniques (17) sont configurés pour déterminer la vitesse de rotation et/ou le sens de rotation d'un corps monté dans le palier, de la force radiale et de la force axiale qui agissent sur le palier, de la direction de la force, du bruit du palier, de la température du palier et d'un éventuel balourd.

14. Palier de mesure selon la revendication 13, **caractérisé en ce que** les composants électroniques comprennent au moins un micro-ordinateur (17).

15. Palier de mesure selon la revendication 14, **caractérisé en ce que** plusieurs micro-ordinateurs (17) sont reliés les uns aux autres par des conducteurs de données qui permettent un échange de données de préférence numériques.

16. Palier de mesure selon au moins l'une des revendications 13 à 15, **caractérisé en ce qu'**au moins l'un des composants électroniques (17) dispose d'un emplacement de raccordement par lequel les données brutes et/ou des informations traitées concernant l'état physique instantané du palier et/ou du composant relié au palier peuvent être amenées à au moins un dispositif séparé d'affichage, de mémoire de données et/ou de traitement de données situé à l'extérieur du palier.
